# EUROPEAN PATENT APPLICATION

(11) **EP 4 604 351 A1**
(43) Date of publication of application: **20.08.2025**
(21) Application number: 24158316.0
(22) Date of filing: 19.02.2024
(51) Int. Cl.: H02J 7/00

(54) **INTERFACE MODULE FOR CONNECTING A FIRST TYPE BATTERY TO AN ELECTRONIC DEVICE CONFIGURED TO CHARGE AND/OR DISCHARGE A SECOND TYPE BATTERY PACK, AND A BATTERY PACK COMPRISING A BATTERY AND THE INTERFACE MODULE**

(71) Applicant: Tridonic GmbH & Co. KG, 6851 Dornbirn (AT)
(72) Inventor: Wilson, Ian, 6851 Dornbirn (AT)
(74) Representative: Beder, Jens

(57) **Abstract**

An interface module (8) is provided for connecting a first type battery (7) to an electronic device configured to charge and/or discharge a second type battery pack, wherein the first type and second type are different from each other. The interface module (8) comprises a controller logic (11) and a second type battery pack simulation module (10), wherein the control logic (11) is configured to control the second type battery pack simulation module (10) in accordance with an actual operational state of the first type battery (7) to present a corresponding second type battery pack (5) load to the electronic device. The invention further regards a battery pack (6) including a first type battery (7) and the interface module (8).

## Description

The present invention provides an interface module for connecting a first type battery to an electronic device configured to charge and/or discharge a second type battery pack and a battery pack comprising a battery and such interface module.

Self contained emergency devices such as emergency luminaires comprise an emergency driver that is connected to mains in order to provide electrical energy to the driver including a charging device for charging a battery connected to the emergency driver. The charging device of the driver is adapted to specific battery type that is used for the emergency device, for example Nickel Cadmium (NiCd) or Nickel Metal Hydride (NiMh). The charge characteristics are optimized in order to ensure battery health and a long battery life. Nevertheless, the battery life must be considered to be significantly shorter than the expected lifetime of the other components of the emergency device. The battery must be replaced at the end of the lifetime of the battery. Unfortunately, due to new regulations, the batteries widely used in the past cannot be replaced by the same type of battery any longer because of their toxic ingredients. Replacing the battery by another battery type having another battery chemistry requires an adaptation of the charge and characteristics, for example charge current, safety thresholds and so on. Replacement batteries that are currently state-of-the-art are Lithium-ion batteries that provide a plurality of advantages but require the significant adaptation of the charging and discharging procedure.

Some emergency drivers of emergency devices are capable of adapting the charge characteristics to the battery chemistry of the battery attached to the driver. Such a device is suggested in EP 4 117 137 A1. Unfortunately, this requires a complex redesign and furthermore most of the devices that are in the field already do not have such capability of adapting to a new battery type with different battery chemistry in case of replacement of the original battery at the end of its lifetime.

It is therefore desirable to find a solution for operating emergency drivers with a new battery type although the emergency drivers are specifically designed for charging the batteries of the older type with other battery chemistry and discharging in order to provide electrical power for operating the luminaire in case of mains failure.

The present invention as defined in the independent claims solves the problem by providing an interface module and a battery pack including such interface module, the interface module enabling the operation of the new battery type without the requirement of adapting the existing emergency driver to the new battery type.

The interface module according to the present invention enables connecting a first type battery (replacement battery, for example lithium-ion battery) to an electronic device, for example an emergency driver, that is configured for operation (charging and/or discharging) with a second type battery pack (battery to be replaced, e.g., NiCd or NiMh). The second type and the first type are different from each other and require different charging and discharging characteristics and procedures. For example, NiCd batteries require constant current charging when there are (almost) fully charged contrary to lithium ion batteries that require a transition from constant current charging to constant voltage charging when they are fully charged. Thus, using the same charging device for both types of battery chemistry is impossible.

Also according to the invention, the interface module comprises a control logic and a second type battery simulation module. Based on an actual operational state of the first type battery, the control logic controls the second type battery simulation module such that it simulates an operational state of the second type battery pack corresponding to the actual operational state of the first type battery by presenting a load to the emergency driver as if a second type battery pack was connected. The interface module is adapted to connect the emergency driver to the first type battery. Since the second type battery simulation module simulates an operational state of the second type battery pack to the emergency driver, the emergency driver reacts as if a second type battery pack was connected. Thus, the emergency driver cannot recognize that the second type battery pack was replaced by the first type battery. Although charging the first battery requires a different charging process, the emergency driver cannot misinterpret the operational state of the first type battery, because it only recognizes the corresponding simulated operational state of a (actually not connected) second type battery pack.

For example, at the end of a charging process, the first type battery requires the transition to constant voltage charging and the charge current provided to the first type battery must be limited or switched off. Since the emergency driver is not adapted to such situation, it would misinterpret this operational state of the first type battery and switch of the charge current. Thus, for the first type battery no constant voltage can be provided, and there is no electrical energy available at the battery charge terminals of the emergency. With the present invention however, the second type battery pack simulation module simulates a corresponding operational state of the second type battery pack (presents a corresponding second type battery pack load), which means in the present example that an impedances of the interface module is presented to the emergency driver and the emergency driver cannot identify the current limitation. Consequently, the charging device in the emergency driver does not switch of charging and the interface module is still provided with electrical energy and capable of constant voltage charging the first type battery connected to the interface module.

The same is true for other operational states of the first type battery. For each possible operational state, the second type battery pack simulation module simulates an operational state of the second type battery pack for the emergency driver that corresponds to the actual operational state of the first that battery connected to the interface module.

The present invention also provides a battery pack comprising the first type battery and the interface module as described above. In case that the battery pack includes the interface module presenting, as described above, a simulation of a second type battery to the emergency driver, it is particularly easy to replace the second type battery pack by the inventive battery pack of the first type battery chemistry. No adaptation on the emergency driver's side is necessary and for an operator of the emergency lighting device, a plug and play solution is provided. The operator does not even need to recognize that the replacement battery pack uses different battery chemistry than the one to be replaced second type battery pack. In case that the replacement battery pack comprises as the first batteries lithium ion batteries, the interface module can advantageously be included in the protection circuit module that is required for a lithium ion battery anyway.

Advantageous aspects and features are defined in the dependent claims.

According to a preferred embodiment, the interface module comprises an adjustable current source and the control logic is configured to control the current source to provide a charge current to the first type battery. Thus, using electrical energy supplied by the emergency driver to the interface module, the control logic controls charging of the first battery connected to the interface module by the adjustable current source. The current provided for charging to the first type of battery can therefore be controlled for correctly charging the first battery.

Further, the interface module may comprise a switchable bypass that is arranged in parallel to the adjustable current source. The switchable bypass is switched into its conducting stage in case that the emergency driver needs to operate a light source from the connected first type battery. Bypassing the adjustable current source when the emergency driver is operated in its emergency mode enables an operation as if the emergency driver was directly connected to the first battery.

In case that the voltage provided by the first type battery is different from the voltage provided by the replaced second type battery pack, it is preferred that the interface module comprises a DC/DC-converter included in the switchable bypass for converting the voltage provided by the first type battery to the level of the replaced second type battery pack. This may be achieved for example by a buck or a boost converter, depending on the concrete values of the replaced sector battery pack and the actually attached first type battery. Such switched type converter provide a controlled switch that is then used to control the state of the switchable bypass. No separate switch is needed

According to a preferred embodiment, the control logic is configured to monitor a temperature signal received from the first type battery. Typically, and specifically in case that the first battery is a lithium-ion battery, the temperature of the first type battery must be observed. Operation of the lithium-ion battery is only allowed within a certain temperature range. In case that the temperature of the lithium-ion battery falls below the lower threshold or exceeds an upper threshold, it must be ensured that charging of the battery is switched off. By monitoring a temperature signal received by the interface module, it is possible to let the control logic control charging of the first type battery to be switched off in case that the temperature signal indicates a temperature outside the allowed temperature range.

It is further advantageous that the interface module is configured to allow an adaptation of the charge parameters to different types of the first type batteries. This is achieved by the interface module providing means for adapting a control strategy of the control logic. Such means can be for example jumpers or a near field communication module (NFC). Adjusting charge parameters enables to use the interface module with a variety of different types of batteries and battery chemistry, and, thus, for different suppliers of replacement battery packs.

The invention will now be described with reference to the attached drawings in which
- Figure 1: shows an application scenario with the inventive interface module comprised by a replacement battery pack, and
- Figure 2: shows a block diagram of the structure of the interface module included in the replacement battery pack.

The following explanations will be made based on the assumption that the battery to be replaced is a NiCd battery, which was commonly used in emergency converters of emergency luminaires. While the description of the invention uses the example of an emergency lighting device, it is evident that any kind of self-contained emergency device comprising a charging device might be used instead. Further, a typically used battery type for replacement battery packs will be used for the following description. However, other battery chemistry may also be used and exemplary parameters that are described hereinafter will then have to be adapted according to the actually used battery chemistry.

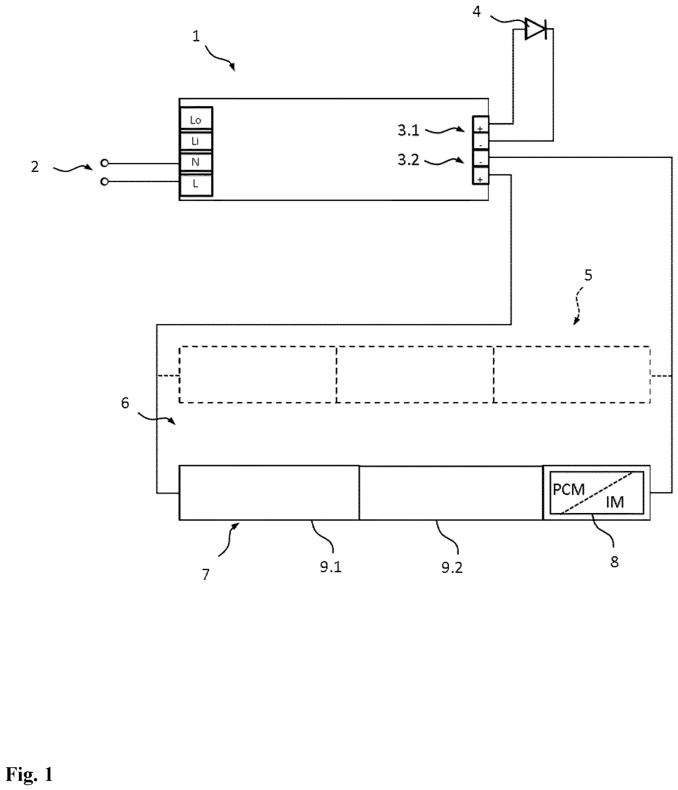

Figure 1 shows a self-contained emergency driver 1 connected to mains power supply 2 for providing electrical energy from mains for driving a light source, indicated by the LED 4, from mains. The LED 4 is connected to a connector of the emergency driver 1. The connector of the emergency driver 1 comprises respective LED terminals 3.1.

Further, the emergency driver 1 comprises battery terminals 3.2 to which a battery pack can be connected for charging and providing electrical energy for an emergency mode operation of the emergency driver 1. The emergency driver 1 comprises circuitry for charging a connected battery pack. The emergency driver 1 comprises a charging device, which is designed to properly charge a battery pack of a specific battery chemistry. For example, the parameters and charge process are optimized for a NiCd battery.

According to the invention, another battery type shall now be connected to the emergency driver 1 as a replacement battery pack without the need to redesign and adapt the emergency driver 1. In the drawing, a replacement battery pack 6 is already connected to the emergency driver 1. The replacement battery pack 6 includes a first type battery 7 comprising two cells 9.1 and 9.2. The battery pack 6 further comprises an interface module 8. In the illustrated embodiment, the interface module 8 is realized to supplement the protection circuit module PCM that is required in a lithium ion battery in order to protect the first type battery 7. For the explanations hereinafter, it is assumed that the first type battery is a lithium ion battery. Other battery types might be used as well.

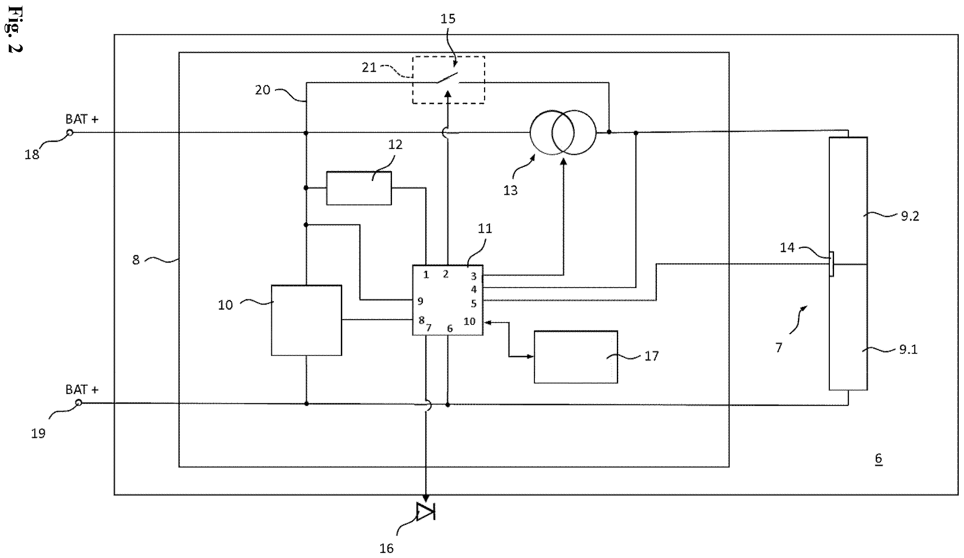

While it is preferred that the interface module 8 is included in the first type battery pack 6 comprising terminals 18 and 19 (shown in figure 2) for connecting it to the battery terminals 3.1 and 3.2 of the emergency driver 1, it is evident, that the interface module 8 might provide additional connectors to allow a connection to an external battery pack not including the interface module. In that case, the interface module 8 and the protection circuit module PCM are individual modules and the protection circuit module may still be included in the battery pack 6.

The first type battery pack 6 is a replacement battery pack for the originally used second type battery pack 5, which is indicated in dashed lines in the drawing. The second type battery pack 5 might be a NiCd battery pack consisting of three D-cells. When replacing a NiCd battery pack by a lithium ion battery pack, it is possible to reduce the size required by the battery cells 9.1 and 9.2, because of the higher energy density in the lithium ion cells. For example, two 26650 size lithium ion battery cells can replace three NiCd D-cells, resulting in a shorter overall length of the cells in the battery pack. It is to be noted, that the illustration in figure 1 is not to scale. However, it can be seen that the overall length of the cells 9.1 and 9.2 of the first type battery 7 is shorter than the three cells of the replaced battery pack 5, and the remaining space may be used in order to include the interface module in the first type battery pack 6. The interface module 8 inserted between the emergency converter 1 and the first type battery 7, especially when included in the first type battery pack, leads to a simple replacement of the original battery pack 5. The emergency driver 1 does not recognize any change of the chemistry of the battery pack, because from the emergency driver's 1 point of view, nothing changes. As it will be described later, the interface module 8 simulates a behavior of the second type battery pack 5 so that the emergency driver does not need to be adapted. Further, even for an operator that needs to replace the original second type battery pack 5, there is no specific adaptation work necessary, and the operator does not even need to have any knowledge about the battery chemistry of the replacement first type battery pack 6. The battery pack can be replaced 5 by the new first type battery pack 6 by disconnecting the original second type battery pack and connecting the first type battery pack 6.

The structure of the interface module 8 will now be described with reference to figure 2.

The interface module 8 is connected by a first terminal 18 and a second terminal 19 to the battery terminals 3.2 of the emergency converter 1 shown in figure 1. The interface module 8 comprises a second type battery simulation module 10 connected to the first terminal 18 and the second terminal 19. The second type of battery simulation module 10 simulates presence of the second type battery pack 5 by presenting a load profile similar to that of the replaced battery pack 5. The simulation is based on an actual state of the first type battery 7 and presents a load to the emergency driver 1 as if the second type battery pack 5 was connected to the emergency driver 1. Thus, the actual state of the first type battery 7 is determined by a control logic of the interface module 8, and the control logic controls the second type of battery simulation module 10 to simulate the corresponding state for a second type battery pack 5 and presents a load to the emergency driver 1 that the second type battery pack 5 would have in this corresponding state.

In order to be able to present such simulation by the second type battery simulation module 10, the second type battery simulation module 10 is connected to the control logic, which is in the illustrated embodiment a microcontroller 11. However, the present invention is not limited to the use of a microcontroller 11, but other control logic may be used as well, for example an ASIC, discrete circuit or proprietary device.

To provide the microcontroller 11 with electrical energy, a low voltage power supply LVPS 12 is connected to the first terminal 18 by pin 1 of the microcontroller 11. The microcontroller 11 is the core of the interface module 8 and controls not only the second type battery simulation module 10 but also further components included in the interface module 8 explained herinafter.

For charging the first type battery 7, the interface module 8 comprises an adjustable current source 13 connected to pin 3 of the microcontroller 11. The microcontroller 11 controls the adjustable current source 13 in response to a state of charge of the first type battery 7 via pin 3. For example, when a certain state of charge of the first type battery 7 is reached, the current supplied by the adjustable current source 13 to the first type battery 7 is limited, and charging is performed by providing a constant voltage to the first type battery 7.

The interface module 8 further comprises a switchable bypass 20 that connects the first terminal 18 and the first type battery 7 in parallel to the adjustable current source. Discharging the first type battery 7 using the switchable bypass 20 allows to reduce losses in case that the emergency driver 1 switches into the emergency mode, in which attached light sources must be powered with electrical energy retrieved from the first type battery 7. For switching the switchable bypass 20, a switch 15 is included in the switchable bypass 20. Operation of the switch 15 is controlled by the microcontroller 11, for example by pin 2. The switch 15 may be a MOSFET, for example.

Alternatively, a simple diode or Schottky diode could be adopted with cathode connection to the first terminal 18.

Indicated by the dashed lines, the switchable bypass 20 may comprise a DC/DC-converter 21. Such DC/DC-converter may be included to adjust the characteristics of the first type battery 7 to characteristics of the second type battery pack 5 that is replaced in case that the voltages of the first type and the second type battery do not match.

The first type battery 7 comprises a thermal sensor 14 measuring the internal temperature of the first type battery 7. The thermal sensor 14 is connected to pin 5 of the microcontroller 11.

The state of charge of the first type battery 7 is controlled by measuring a battery voltage, which is indicated by the connection of pin 4 with the line connecting the first terminal 18 via the adjustable current source 13 with the first type battery 7. When the voltage indicates that the first type battery 7 is fully charged, the microcontroller 11 switches off or regulates down the charge current by controlling the adjustable current source 13 via pin 3. When doing so, the microcontroller 11 controls the second type battery simulation module 10 to present a load to the emergency driver 1 corresponding to a load a second type battery pack 5 would present when it is connected to the emergency driver 1 and is fully charged. In response to being presented such simulated second type battery state, the emergency driver 1 will not switch off charging and electrical energy they still be supplied by the emergency driver 1 to the interface module 8. This electrical energy can be used for power supply of the microcontroller 11 but also to further charge or hold the fully charged state of the first type battery 7.

Further, the measurement of the battery voltage at pin 4 allows to detect low charging states of the lithium ion battery pack, when the first type battery 6 of the replacement battery pack 6 is discharged in emergency operation of the emergency driver 1. Based on a detection of a battery voltage falling below a lower threshold, the microcontroller 11 can stop discharging by controlling switch 15 to open.

Pin 6 of the microcontroller 11 is connected to the second terminal 19. Pin 7 may be used to control an additional indicator LED 16. It is to be noted that using the additional indicator LED 16 is optional. Since the emergency driver 1 controls an indicator LED itself and the emergency driver 1 cannot determine that the replacement battery pack 6 comprises a first type battery 7, which is of another type as the replaced battery pack 5, the indicator LED will still be in function and the indicated status (for example indicating charging of the battery pack) will still be correct. Additionally, in case that charging of the first type battery 7 is stopped, e.g., because the temperature of the battery pack 6 was determined outside the allowed range, the second type battery pack simulation module 10 could be used to simulate an open circuit to the emergency driver 1, which then in turn switches off its charging device. As a consequence, the indicator LED provided on the emergency driver 1 extinguishes. Nevertheless, in order to facilitate that an operator can recognize that the interface module functions properly or charging is performed for the first type battery 7, the additional indicator LED 16 may be provided. The indicator LED 16 can also be used to indicate certain other events or malfunctions of the interface module 8 for the first type battery 7. For indicating additional functionality, a bicolor LED may be used.

Depending on the state of the first type battery 7, microcontroller 11 controls via pin 8 the second type battery simulation module 10. Parameters for charging the first type battery 7 can be stored for example in memory 17, which is connected to the microcontroller 11 by a pin 10. Not illustrated in the figure is the possibility to adapt the parameters that the stored in the memory 17 either based on inputting parameters via a dedicated interface, selecting preset parameter sets, for example using jumpers or even learning parameters when the interface module 8 is connected to an existing emergency driver 1 and a replacement first type battery 7. The interface module 8 could be configured to learn from charging cycles performed for the first type battery 7 the parameters that need to be used. Further, it is also possible to use an automated detection of used battery chemistry in the first type battery 7. Such automated detection itself is known in the art and the detection results can be used to select charge parameters that are pre-stored in the memory 17. Examples for such parameters depending on different lithium battery chemistry or capacity maybe charge current, charge time, thresholds (charge and/or discharge), and temperature thresholds.

Exemplary situations for the simulation of the second type battery pack 5 will be explained for easy understanding of the present invention. Again, it must be emphasized that the below given explanations are based on an typical situation in which a NiCd battery pack 5 is replaced by the lithium ion battery pack 6 including the interface module 8 as shown in figure 1.

## Claims

1. Interface module for connecting a first type battery (7) to an electronic device (1) configured to charge and/or discharge a second type battery pack (5), wherein the first type and the second type are different from each other, the interface module comprising a control logic (11) and a second type battery pack simulation module (10), wherein the control logic (11) is configured to control the second type battery pack simulation module (10) in accordance with an actual operational state of the first type battery (7) to emulate a corresponding second type battery pack (5) operational state for the electronic device (1).

2. Interface module according to claim 1, comprising an adjustable current source (13), wherein the control logic (11) is configured to control the current source (13) to provide a charge current to the first type battery (7,).

3. Interface module according to claim 2, comprising a switchable bypass (20) in parallel to the adjustable current source (13).

4. Interface module according to claim 3, wherein the switchable bypass (20) comprises a DC/DC-converter (21) to adjust output characteristics of the first type battery (7) to correspond to the second type battery pack (5).

5. Interface module according to any one of claims 1 to 4, wherein the control logic (11) is configured to monitor for a temperature signal received from the first type battery (7).

6. Interface module according to claim 5, wherein the control logic (11) is configured to switch off the adjustable current source (13) in case that the temperature signal indicates a temperature of the first type battery (7) outside a predefined temperature range.

7. Interface module according to any one of claims 1 to 6, wherein the second type battery pack (5) requires constant current charging and the first type battery (7) requires constant voltage charging when a state of charge exceeds a predefined threshold.

8. Interface module according to any one of claims 1 to 7, wherein the interface module (8) provides means for adapting a control strategy of the control logic (11).

9. Battery pack comprising a first type battery (7) and an interface module (8) according to any one of claims 1 to 8.
